# EUROPEAN PATENT APPLICATION

(11) **EP 4 790 493 A2**
(43) Date of publication of application: **12.08.2026**
(21) Application number: 26183736.3
(22) Date of filing: 22.08.2024
(51) Int. Cl.: G04C 10/02

(54) **ELECTRONIC DEVICE AND ELECTRONIC TIMEPIECE**

(30) Priority: 31.08.2023 JP 2023140633
(62) Document number(s) of the earlier application(s) in accordance with Art. 76 EPC: 24195995.6 / 4 517 444
(71) Applicant: Casio Computer Co., Ltd., Tokyo 151-8543 (JP)
(72) Inventor: Kunimi, Ryoichi, Hamura-shi, 205-8555 (JP)
(74) Representative: Grünecker Patent- und Rechtsanwälte PartG mbB

(57) **Abstract**

Disclosed is an electronic device including a base (2) and an annular calendar disk (3). The base (2) includes mounting parts (21, 22, 23). The first mounting part (21) has an annular main surface (21a). The second mounting part (22), inside the first mounting part (21), has a main surface (22a). The third mounting part (23) surrounds the first mounting part (21). At least one raised part (221) is provided on the first mounting part (21) at a position corresponding to an outer periphery of the second mounting part (22). The main surface (22a) and raised part (221) are lower than a main surface (23a) of the third mounting part (23) and higher than the main surface (21a). The calendar disk (3) has a thickness smaller than a height difference between the raised part (221) and main surface (23a), and is partly disposed on the raised part (221).

## Description

### TECHNICAL FIELD

This disclosure relates to an electronic device and an electronic timepiece.

### DESCRIPTION OF RELATED ART

Electronic devices such as an electronic timepiece have various shapes and functions. Mounting different modules on such a wide variety of products however increases manufacturing cost and is not desirable.

In this regard, JP 2001-013268A discloses a timepiece that can cope with a change of the planar shape and/or dimensions of a device case or a dial simply by changing only the shape and/or dimensions of a support without changing the module ("internal structure" in JP 2001-013268A).

Electronic devices equipped with a solar panel (solar cell) that generate electricity by receiving light are also known.

In such cases, there is a need to mount a solar panel having a different shape, arrangement position, and the like depending on the model in order to cope with the exterior design of the electronic device and the power generation required for the electronic device. In such a case, it is preferable to reduce manufacturing cost by sharing as many components as possible.

### SUMMARY OF THE INVENTION

For the timepiece disclosed in JP 2001-013268A, when an exterior case, a dial, or the like is changed, it is necessary to change only the shape and size of a support but unnecessary to change the shape and size of the internal structure such as a timepiece movement. However, in JP 2001-013268A, to cope with the change, an attachment for supporting a component is to be provided each time. This is not preferable in terms of design labor, manufacturing cost, and the like, requiring, for example, fine adjustment of the shape of the support for each device (model) .

The present disclosure is made in view of the above circumstances, and an object of the present disclosure is to provide an electronic device and an electronic timepiece in which common components can be used among a plurality of models to suppress manufacturing cost.

To achieve the abovementioned object, according to an aspect of the present disclosure, an electronic device comprises:
a base including:
   a first mounting part that includes a main surface provided in an annular shape;
   a second mounting part that is provided at an inner side of the first mounting part and includes a main surface; and
   a third mounting part that is provided around the first mounting part, wherein
   at least one raised part is provided on the first mounting part at a position corresponding to an outer periphery of the second mounting part and is raised upward in a thickness direction of the base, and
   the main surface of the second mounting part and the at least one raised part are both lower than a main surface of the third mounting part and higher than the main surface of the first mounting part; and
an annular calendar disk that has a thickness smaller than a difference between a height of the at least one raised part and a height of the main surface of the third mounting part and includes an inner peripheral side partly disposed on the at least one raised part.

According to this disclosure, common components can be used among a plurality of models to suppress manufacturing cost.

### BRIEF DESCRIPTION OF DRAWINGS

The advantages and features provided by one or more embodiments of the disclosure will become more fully understood from the detailed description given hereinbelow and the appended drawings which are given by way of illustration only, and thus are not intended as a definition of the limits of the present disclosure, wherein:
FIG. 1 is an exploded perspective view of a major portion of a "first model" timepiece according to an embodiment;
FIG. 2 is a side cross-sectional view of a major portion of the "first model" timepiece;
FIG. 3 is a cross-sectional perspective view of a major portion of the "first model" timepiece;
FIG. 4 is an exploded perspective view of a major portion of a "second model" timepiece according to an embodiment;
FIG. 5 is a side cross-sectional view of a major portion of the "second model" timepiece;
FIG. 6 is a cross-sectional perspective view of a major portion of the "second model" timepiece;
FIG. 7 is a perspective view of the front surface side of a base according to an embodiment;
FIG. 8 is an enlarged perspective view of a major portion of the base illustrated in FIG. 7;
FIG. 9 is a perspective view of a calendar disk and a calendar disk holder assembled on the surface of a base according to an embodiment;
FIG. 10 is a perspective view of a substantially circular solar panel assembled on the surface of the base illustrated in FIG. 9;
FIG. 11 is a perspective view of the back surface side of an outer peripheral frame according to an embodiment;
FIG. 12 is a perspective view of a substantially circular solar panel assembled on the back surface of the outer peripheral frame illustrated in FIG. 11, as viewed from the back surface side;
FIG. 13 is a side cross-sectional view of a major portion of a contact portion between a solar panel and a circuit board in the "first model" timepiece;
FIG. 14 is a side cross-sectional view of a major portion of a contact portion between a solar panel and a circuit board in the "second model" timepiece; and
FIG. 15 is a side cross-sectional view of a major portion of a conventional timepiece.

### DETAILED DESCRIPTION

Hereinafter, one or more embodiments of the present disclosure will be described with reference to the drawings.

The embodiment described below is provided with various limitations technically preferable for carrying out the present disclosure. However, the scope of the present disclosure is not limited to the embodiment below or illustrated examples.

The present embodiment illustrates an example in which the electronic device is an electronic timepiece that displays time. Hereinafter the electronic timepiece is referred to simply as the "timepiece".

The timepiece, which is the electronic device according to the embodiment, includes at least a base 2, an outer peripheral frame 6, a calendar disk 3, and the like. The timepiece secures spaces at higher and lower levels than the calendar disk 3 in which a solar panel 5 can be disposed.

This makes it possible to handle a plurality of models having different shapes and arrangement positions of the solar panel 5 while using the common base 2, the common outer peripheral frame 6, and the like.

In other words, according to the embodiment, when a model in which the solar panel 5 is disposed at a higher level than the calendar disk 3 (referred to as a "first model" timepiece 100) and a model in which the solar panel 5 is disposed at a lower level than the calendar disk 3 (referred to as a "second model" timepiece 200) are manufactured, at least the common base 2 and the common outer peripheral frame 6 can be used.

In each case of the "first model" timepiece 100 and the "second model" timepiece 200, various components constituting the timepieces 100 and 200, such as a circuit board 1, the base 2, the calendar disk 3, the solar panel 5, the outer peripheral frame 6, and the like, are assembled as a module and housed in an unillustrated device case. The device case is formed of, for example, a metal such as stainless steel or titanium, ceramic, various synthetic resins, or the like. The material that forms the device case is not limited to the material illustrated herein.

The device case is formed in a shape of a hollow short column. The front surface side of the device case of the timepieces 100 and 200 (visible side of the timepiece) is sealed by an unillustrated watch glass formed of transparent resin, glass, or the like. The back surface side of the device case of the timepieces 100 and 200 is sealed by an unillustrated back cover.

An unillustrated timepiece band can be attached to the device case, allowing the timepieces 100 and 200 to be worn on a user's wrist.

The specific shape, configuration, and the like of the device case that make up the external appearance of the timepieces 100 and 200 are not particularly limited but appropriately set according to the design and specifications.

In the drawings of the embodiment, illustration of the device case of the timepieces 100 and 200 is omitted, and only the internal configuration (also referred to as a module) accommodated in the hollow of the device case is shown.

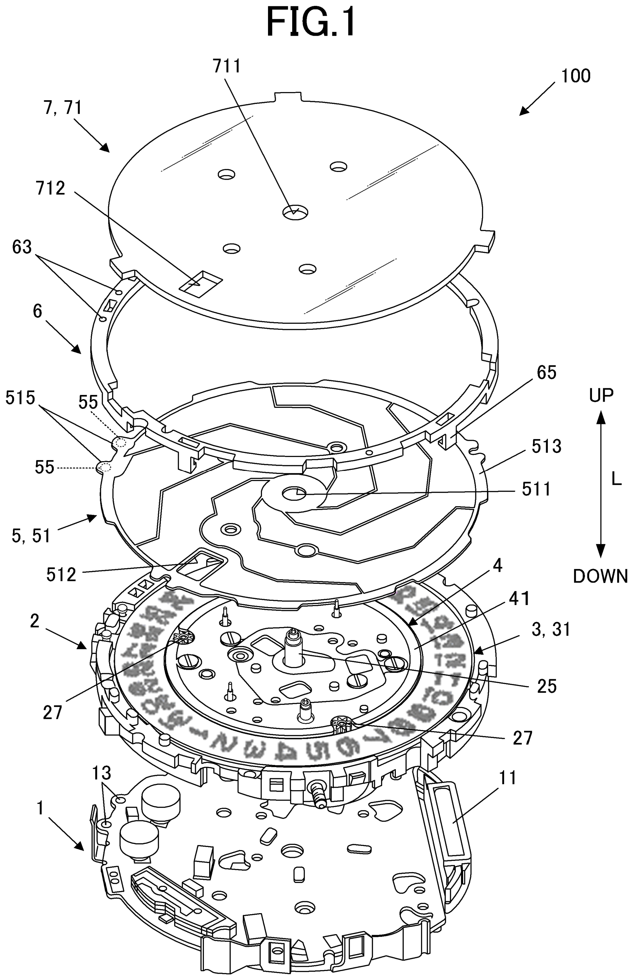

FIG. 1 to FIG. 3 illustrate the "first model" timepiece 100 (the internal configuration or module of the timepiece 100).

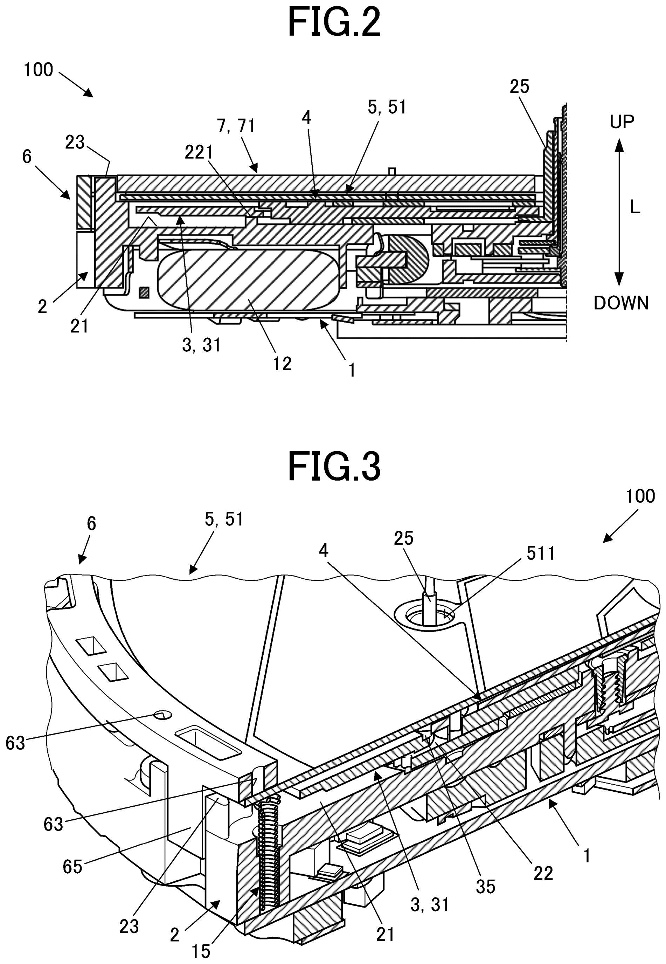

FIG. 1 is an exploded perspective view of a major portion of the internal configuration of the "first model" timepiece. FIG. 2 is a side cross-sectional view of a major portion of the internal configuration of the "first model" timepiece in which the components illustrated in FIG. 1 are assembled. FIG. 3 is a cross-sectional perspective view of a major portion of the internal configuration of the "first model" timepiece. In FIG. 3, a dial 7 is not shown.

As illustrated in FIG. 1 to FIG. 3, the "first model" timepiece 100 includes a substantially circular solar panel 51 as the solar panel 5.

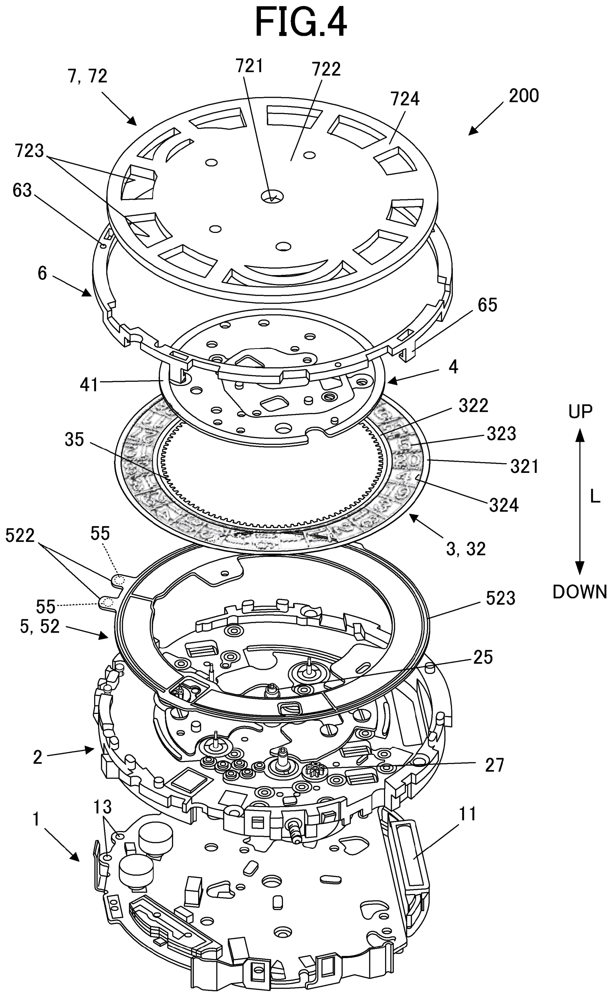

FIG. 4 to FIG. 6 illustrate the "second model" timepiece 200 (the internal configuration or module of the timepiece 200).

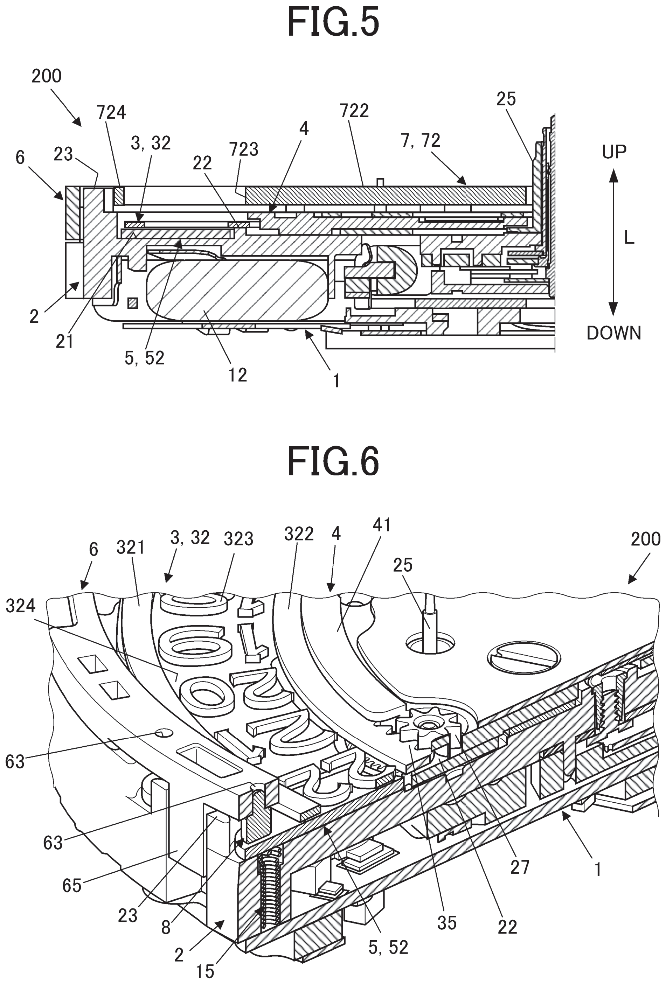

FIG. 4 is an exploded perspective view of a major portion of the internal configuration of the "second model" timepiece. FIG. 5 is a side cross-sectional view of a major portion of the internal configuration of the "second model" timepiece in which the parts illustrated in FIG. 4 are assembled. FIG. 6 is a cross-sectional perspective view of a major portion of the internal configuration of the "second model" timepiece.

As illustrated in FIG. 4 to FIG. 6, the "second model" timepiece 200 includes a substantially annular solar panel 52 as the solar panel 5.

In the following embodiment, common to the "first model" and "second model", the upward side of the axial direction L in FIG. 1, FIG. 2, FIG. 4, and FIG. 5 is referred to as the "front surface side (visible side)" and the downward side as the "back surface side (non-visible side)" (see FIG. 1, FIG. 2, FIG. 4, and FIG. 5 for the axial direction L). The "axial direction L" is parallel to a hand shaft ("hand shaft 25" in FIG. 2, FIG. 5, and the like) in an analog timepiece.

In the following, the side facing the side surface of the unillustrated device case is referred to as "outer side" or "outer peripheral side", and the side facing the center of the timepieces 100 and 200 where a hand shaft 25 (see FIG. 2, FIG. 5, and the like) is disposed is referred to as "inner side" or "inner peripheral side".

[Configuration] First, the "first model" timepiece 100 (the internal configuration or module of the timepiece 100) is described with reference to FIG. 1 to FIG. 3 and the like.

As illustrated in FIG. 1, the "first model" timepiece 100 (the internal configuration or module of the timepiece 100) includes the circuit board 1, base 2, solar panel 5 (substantially circular solar panel 51), outer peripheral frame 6, dial 7, and the like, disposed in order from the back surface side (downward side) to the front surface side (upward side) of the timepiece 100 along the axial direction L.

For example, an antenna 11, a secondary battery 12 (see FIG. 2), and various electronic components such as an integrated circuit (IC) chip and a terminal are mounted on the circuit board 1. The various electronic components are not shown in the drawings. Terminals 13 on the circuit board 1 are provided at a position corresponding to terminals 55 of the solar panel 5 described later.

The base 2, which is formed of, for example, various resins, serves as a base (main plate) to which various components constituting the timepiece 100 (a module of the timepiece 100) are assembled. As illustrated in FIG. 1 and the like, the base 2 is overlaid on (the front side of) the circuit board 1.

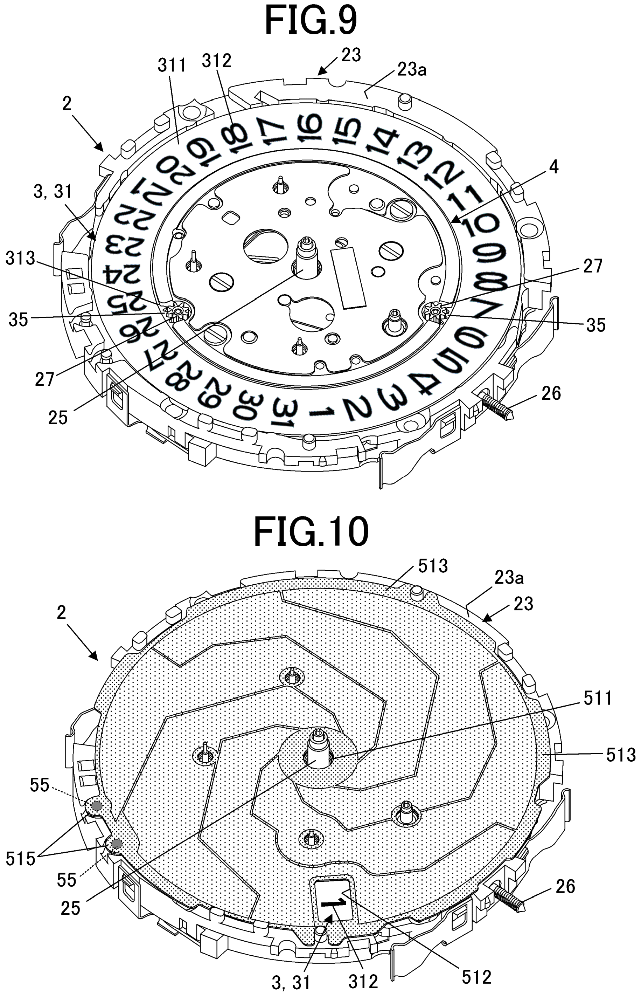

Various structural parts such as a motor (not shown) and a train wheel mechanism (not shown) for transmitting power of the motor to a hand (not shown) and the calendar disk 3 are appropriately distributed and assembled on the front and back sides of the base 2 (visible and non-visible sides of the timepiece). An unillustrated crown is disposed as an operation part on a side of the timepiece 100 such as the three o'clock side. A winding stem 26 (see FIG. 9 and FIG. 10) connected to an unillustrated internal structure is attached to a side of the base 2 at a position corresponding to the crown.

As described later, the calendar disk 3 (first calendar disk 31 in FIG. 1 and the like), the calendar disk holder 4, and the like are disposed on top (front side) of the base 2.

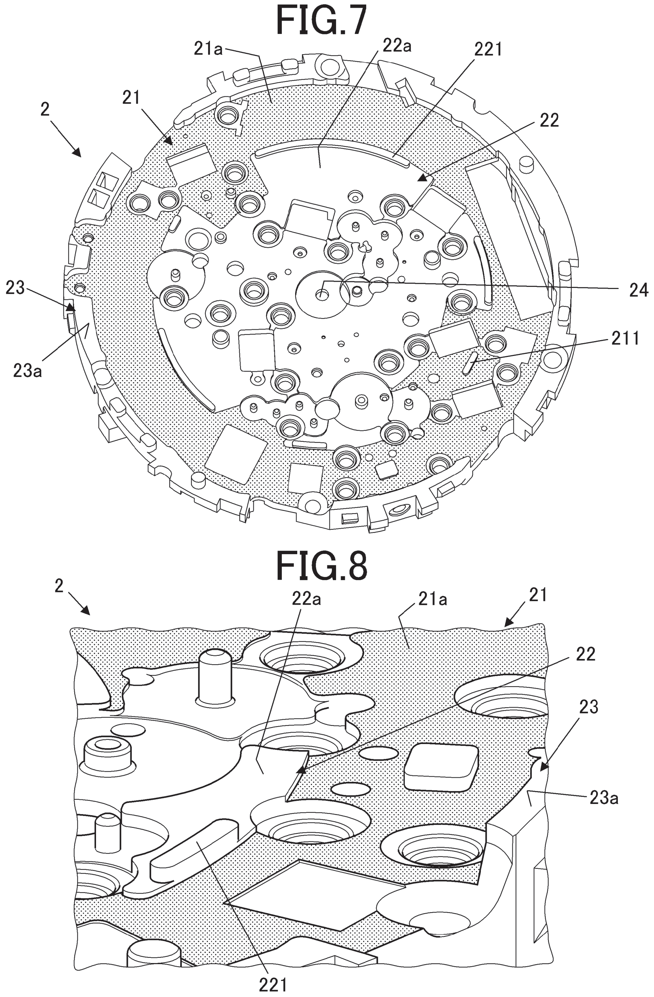

FIG. 7 is a perspective view of the base of the present embodiment. FIG. 8 is an enlarged perspective view of a major portion of the base illustrated in FIG. 7.

As illustrated in FIG. 7, the entire base 2 is in a substantially disk shape formed of resin or the like, and a shaft hole 24 through which the hand shaft 25 is inserted is provided at the center. The base 2 includes a first mounting part 21, a second mounting part 22 provided inside the first mounting part 21, and an outer peripheral side mounting part (third mounting part) 23 provided around the first mounting part 21. The first mounting part 21 is a base mounting part having a substantially annular main surface 21a.

Here, the term "main surface" refers to a surface serving as a reference in the first mounting part 21 and the like. For example, the first mounting part 21 has irregularities throughout, having a portion that is dug in and lowered and a portion that is raised. Even in such a case, when a flat plate-shaped component is mounted on the first mounting part 21, the surface mainly supporting the mounted component is referred to as the "main surface 21a" of the first mounting part 21. The "main surfaces" of the second mounting part 22 and the outer peripheral side mounting part 23, namely, the "main surface 22a" of the second mounting part 22 and the "main surface 23a" of the outer peripheral side mounting part 23 have the same meaning. The main surface 23a of the outer peripheral side mounting part 23, i.e., the third mounting part, is provided to include substantially arc-shaped surfaces. The main surface 23a of the outer peripheral side mounting part 23 may be provided to include a substantially annular-shaped surface.

In the embodiment, the main surface 22a of the second mounting part 22 of the base 2 is lower than the main surface 23a of the outer peripheral side mounting part 23 (in the axial direction L) and higher than the main surface 21a of the first mounting part 21 (in the axial direction L).

In FIG. 7 and FIG. 8, the main surface 21a of the first mounting part 21 is shaded in gray. As illustrated in FIG. 7 and FIG. 8 (FIG. 8 in particular), the main surface 21a of the first mounting part 21 provided in a substantially annular shape is one step lower than the main surface 22a of the second mounting part 22 provided inside the first mounting part 21.

Also, as illustrated in FIG. 7 and FIG. 8, in one configuration, the second mounting part 22 is provided with raised parts 221 at the boundary with the first mounting part 21. The raised parts 221 are higher than the main surface 22a of the second mounting part 22. The raised parts 221 are where at least a portion of the inner peripheral side (inner periphery 313, see FIG. 9) of the calendar disk 3 (first calendar disk 31) described later is mounted. The upper surface of the raised parts 221 is provided to include substantially arc-shaped surfaces. In other words, the raised parts 221 in the embodiment are disposed in an arc shape with partial breaks. The raised parts 221 may be provided in an annular shape almost without breaks at the boundary between the first mounting part 21 and the second mounting part 22. The entire second mounting part 22 (main surface 22a of the second mounting part 22) may be almost as high as the raised parts 221. The raised parts 221 support the inner peripheral side of the calendar disk 3 (first calendar disk 31) in a well-balanced manner at approximately equal distances. This allows the calendar disk 3 (first calendar disk 31) to be disposed on the second mounting part 22 without tilting.

The raised parts 221 are not necessarily provided on the second mounting part 22. The raised parts 221 may be provided on the first mounting part 21 if the raised parts 221 are at a position corresponding to the outer periphery (boundary) of the substantially circular second mounting part 22.

The substantially circular calendar disk holder 4 needs to hold the inner periphery of the substantially annular calendar disk 3. Therefore, it is preferable that the second mounting part 22 on which the components such as the calendar disk holder 4 are disposed has a substantially circular shape. It is also preferable in terms of arrangement and ease of processing that the raised parts 221 are provided on the outer periphery of the second mounting part 22 (at the boundary with the first mounting part 21). However, a case may happen where the raised parts 221 cannot be provided on the second mounting part 22 or in the vicinity of the second mounting part 22 due to the disposition of various parts such as an unillustrated motor or the like. In such a case, as illustrated in FIG. 7, an auxiliary raised part 211 having the upper surface at the same height as the upper surface of the raised parts 221 may also be provided supplementarily on the first mounting part 21.

FIG. 9 is a perspective view of the first calendar disk and the calendar disk holder assembled on the upper (front side) surface of the base illustrated in FIG. 7.

As illustrated in FIG. 9, the calendar disk 3 (first calendar disk 31) is in a substantially annular shape and disposed at a lower level than the outer peripheral frame 6. As described above, at least a portion of the inner peripheral side (inner periphery 313) of the calendar disk 3 (first calendar disk 31) is disposed on the second mounting part 22, i.e., the raised parts 221 of the second mounting part 22 in the illustrated configuration. The material that forms the calendar disk 3 (first calendar disk 31) is not particularly limited. The calendar disk is formed of, for example, a metal such as stainless steel (SUS) or titanium.

The calendar disk 3 (first calendar disk 31) includes a substantially annular main body 311 and the inner periphery 313. The inner periphery 313 is the inner peripheral side portion of the main body 311. On the surface of the main body 311, a number or the like indicating a date (referred to as a letter part 312) is provided. The letter part 312 may be provided planarly by printing or the like. The letter part 312 may also be provided three-dimensionally by cutting, or by sticking a cut-out character shape or the like on the main body part 331, or the like. On the inner peripheral side of the inner periphery 313, teeth (gear part) 35 are provided along the peripheral direction (see FIG. 9).

A gear 27 that meshes with at least the teeth (gear part) 35 of the calendar disk 3 (first calendar disk 31) is exposed on the main surface 22a of the second mounting part 22. The gear 27 constitutes an unillustrated train wheel mechanism for rotating the substantially annular calendar disk 3 (first calendar disk 31) in the peripheral direction. The main body of the train wheel mechanism for rotating the calendar disk 3 (first calendar disk 31), a motor for operating the train wheel mechanism, and the like (none of which are shown) may be assembled on the back surface side of the base 2.

The calendar disk holder 4 that suppresses floating of the calendar disk 3 (first calendar disk 31) is disposed on the main surface 22a of the second mounting part 22. The calendar disk holder 4 is in a substantially disk shape and disposed inside the substantially annular calendar disk 3 (first calendar disk 31), namely, inside the raised parts 221 on which at least a portion of the inner peripheral side of the calendar disk 3 (first calendar disk 31) is mounted. The calendar disk holder 4 includes a roof 41 that extends above at least a portion of the inner peripheral side of the calendar disk 3. The roof 41 covers the inner peripheral side of the calendar disk 3 (first calendar disk 31) to such an extent that the calendar disk holder 4 does not interfere with the teeth (gear part) 35 of the calendar disk 3 (first calendar disk 31). This allows the calendar disk holder 4 to suppress floating of the calendar disk 3 (first calendar disk 31) without inhibiting the rotation thereof.

An unillustrated anti-magnetic plate or the like may also be disposed on the main surface 22a of the second mounting part 22. In a case where an anti-magnetic plate is disposed, the anti-magnetic plate is disposed at such a position that the anti-magnetic plate covers at least the motor to magnetically shield the motor.

At least a portion of the solar panel 5 (substantially circular solar panel 51) provided at a height between the outer peripheral frame 6 and the calendar disk 3 (first calendar disk 31) can be disposed on the outer peripheral side mounting part 23 of the base 2. Namely, as illustrated in FIG. 1 to FIG. 3, in the "first model" timepiece 100, the solar panel 5 (substantially circular solar panel 51) is disposed in a space higher than the calendar disk 3 (first calendar disk 31).

The solar panel 5 includes one or more photovoltaic elements that receive light and generate electromotive force.

FIG. 10 is a perspective view of a substantially circular solar panel mounted on the upper (front side) surface of the base illustrated in FIG. 9.

As illustrated in FIG. 1 and FIG. 10, the substantially circular solar panel 51 provided in the "first model" timepiece 100 is in a thin disk shape, and a shaft hole 511 through which the hand shaft 25 is inserted is provided approximately at the center corresponding to the shaft hole 24 (see FIG. 7) of the base 2.

A small window 512 is provided at the three o'clock position or the like on an analog timepiece. The letter part 312 of the calendar disk 3 (first calendar disk 31) corresponding to a date display is exposed through the small window 512.

As illustrated in FIG. 10, the substantially circular solar panel 51 also includes an outer periphery 513 at its outer peripheral portion that does not contribute to power generation. The outer periphery 513 is mounted on the main surface 23a of the outer peripheral side mounting part 23. In the example illustrated in FIG. 1 and the like, the outer periphery 513 is provided in a portion of the outer peripheral portion of the substantially circular solar panel 51. However, the range, size, shape, and the like in which the outer periphery 513 is provided are not limited to the illustrated example. The outer periphery 513 may be provided, for example, on the entire outer peripheral portion of the substantially circular solar panel 51.

Extensions 515 extending outward are provided in a portion of the outer periphery 513. Terminals 55 are provided on the back surface side of the extensions 515. Contact members 15 are connected from below to a position corresponding to the terminals 55. Each of the contact member 15 is, for example, a coil spring formed of a conductor. The end portion on the base end side of the contact member 15 is connected to one of the terminals 13 on the circuit board 1 (see FIG. 1). The contact member 15 passes through the base 2 (for example, the first mounting part 21 or the outer peripheral side mounting part 23 of the base 2) from the side facing the circuit board 1 in the thickness direction (along the axial direction L). The end portion on the insertion side of the contact member 15 is connected to one of the terminals 55 of the solar panel 5 (substantially circular solar panel 51). Two terminals 13 and two terminals 55 are provided, and the solar panel 51 is connected to the circuit board 1 at two positions by the terminals.

This enables the solar panel 5 (substantially circular solar panel 51) to be electrically connected to the circuit board 1 via the contact members 15. As a result, the electromotive force generated in the solar panel 5 is supplied to the circuit board 1 and the secondary battery 12 provided on the circuit board 1 and serves as a power source for each component of the timepiece 100.

Using a coil spring as the contact member 15 can suppress the possibility of contact failure that may occur when the length of the contact member 15 varies slightly due to tolerance or the like.

A coil spring used as the contact member 15 can also function as a pressing member whose end portion on the insertion side exerts a restoring force upward from the circuit board 1. In other words, the contact member 15 provides a pressing force that pushes up the solar panel 5.

Therefore, in the embodiment, the outer peripheral frame 6 is disposed at a position opposite to the end portion on the insertion side of the contact member 15 to prevent the solar panel 5 from being pushed upward by the contact member 15.

The outer peripheral frame 6 presses at least a portion of the solar panel 5 from above against a pressing force from below exerted by the contact member 15 being a pressing member and prevents the solar panel 5 from floating up or rattling.

In other words, when at least a portion of the substantially circular solar panel 51 is disposed on the outer peripheral side mounting part 23, the outer peripheral frame 6 presses at least a portion of the substantially circular solar panel 51 from above, thereby preventing the solar panel 5 (substantially circular solar panel 51) from floating up.

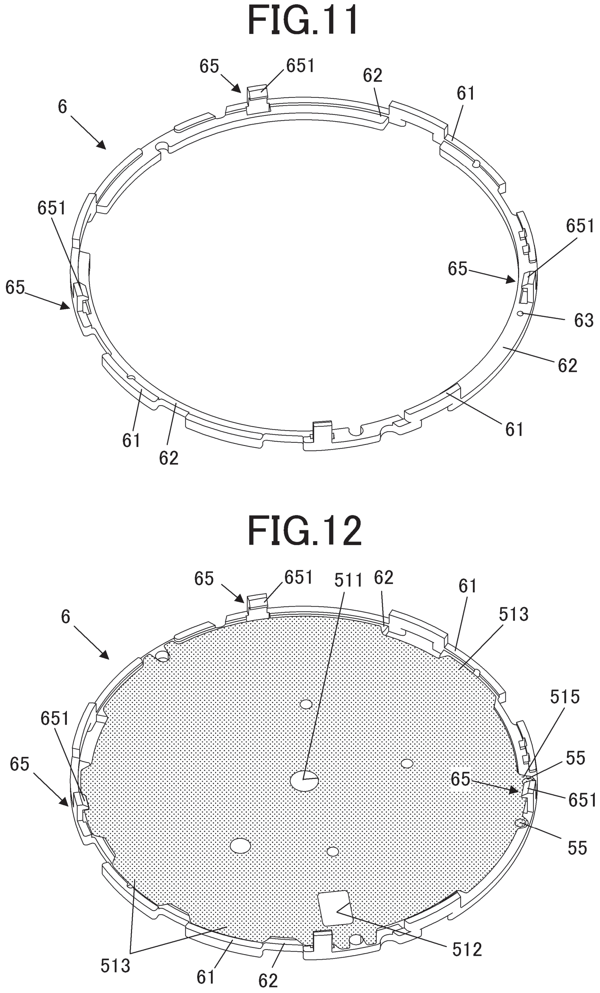

FIG. 11 is a perspective view of the outer peripheral frame viewed from the back surface side facing the base. FIG. 12 is a perspective view in which the substantially circular solar panel is overlaid from the back surface side on the outer peripheral frame illustrated in FIG. 11.

As illustrated in FIG. 11 and the like, the outer peripheral frame 6 is in a substantially annular shape and disposed along at least a portion of the outer peripheral side mounting part 23 of the base 2.

The outer peripheral frame 6 includes hooks 65 that are locked to the outer peripheral portion of the base 2 at a plurality of positions in the peripheral direction. Each of the hooks 65 has, for example, spring properties, and includes a locking claw 651 protruding to the inner peripheral side. By hooking the locking claws 651 of the hooks 65 onto the outer peripheral portion of the base 2, the outer peripheral frame 6 is locked to the base 2 and mounted so as not to float up from the base 2.

It is preferable that the hooks 65 are provided at least in the vicinity of the positions where the contact members 15 are provided when the solar panel 5 (substantially circular solar panel 51) is disposed. As described above, each of the contact member 15 is a pressing member such as a coil spring, and the solar panel 5 (substantially circular solar panel 51) is pushed up from below at a portion where the contact member 15 is provided. Providing the hooks 65 in the vicinity, therefore, enables the outer peripheral frame 6 to be firmly locked to the base 2, resisting the pressing force from below when the solar panel 5 is pushed up.

In the "second model" described later, spacers 8 are disposed at positions approximately opposite to the contact members 15. Thus, holes 63 for attaching the spacers 8 are provided in the outer peripheral frame 6. It is preferable that the hooks 65 are provided in the vicinity of the holes 63.

The outer peripheral frame 6 includes first lower surfaces 61 provided in a lower portion on the outer peripheral side in the thickness direction of the base, and second lower surfaces 62 provided on the inner peripheral side of the first lower surfaces 61 and at a higher level than at least a portion of the first lower surfaces 61.

The first lower surfaces 61 of the outer peripheral frame 6 are in contact with the main surface 23a of the outer peripheral side mounting part 23 (see FIG. 3 for example).

The outer peripheral frame 6 is configured such that the spacers 8, which will be described later, can be attached thereto. For example, each of the spacer 8 is formed of a material such as metal or carbon tool steel, and the outer peripheral frame 6 is formed of a synthetic resin (insulating material) or the like. For example, the second lower surfaces 62 of the outer peripheral frame 6 are provided with the holes 63 that lock at least a portion of the spacers 8. The spacers 8 are disposed at least at positions approximately opposite to the contact members 15, which are pressing members. The spacers 8 may be provided not only at approximately opposite positions to the contact members 15 but also at a plurality of positions in the peripheral direction of the outer peripheral frame 6. In this case, it is preferable that the spacers 8 are disposed at as equal intervals as possible in the peripheral direction in addition to the position approximately opposite to the contact members 15.

When the solar panel 5 (substantially circular solar panel 51) is disposed in a space higher than the calendar disk 3 (first calendar disk 31) as in the timepiece 100, at least a portion of the outer periphery 513 of the solar panel 5 (substantially circular solar panel 51) is provided to be in contact with the second lower surfaces 62 as illustrated in FIG. 12. At least a portion of the outer periphery 513 of the substantially circular solar panel 51 can be sandwiched between the second lower surfaces 62 of the outer peripheral frame 6 and the outer peripheral side mounting part 23.

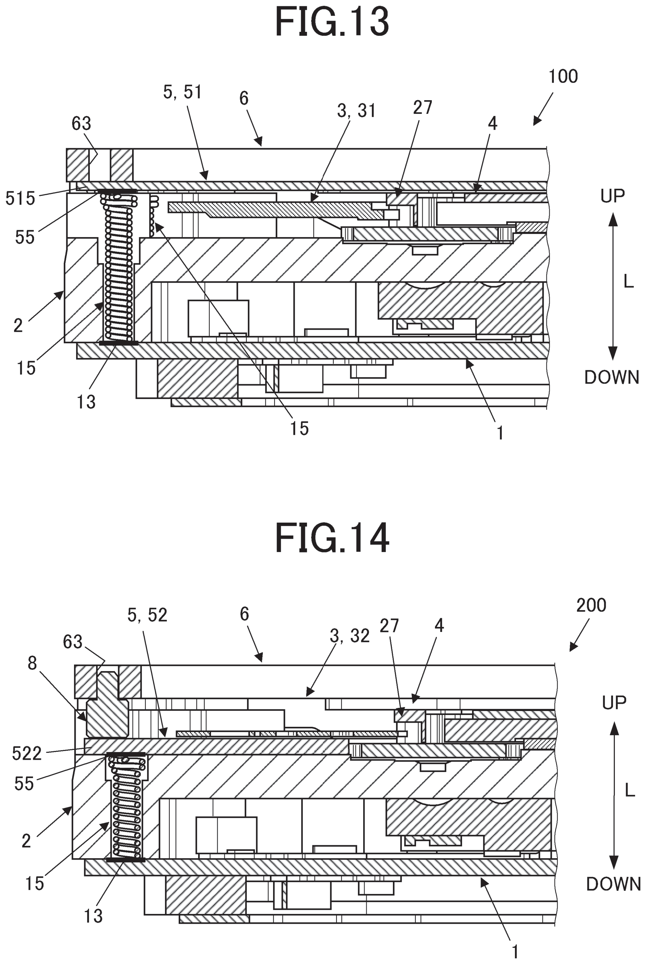

FIG. 13 is a side cross-sectional view of a major portion of a contact portion between the substantially circular solar panel and the circuit board in the "first model" timepiece.

As illustrated in FIG. 13, when the substantially circular solar panel is disposed in a space higher than the calendar disk 3 (first calendar disk 31), the outer peripheral frame 6 can directly press the outer periphery 513 of the solar panel 5 (substantially circular solar panel 51) by the second lower surfaces 62.

This prevents the solar panel 5 from floating up and allows the solar panel to be held without tilting even when the solar panel 5 (substantially circular solar panel 51) is pushed up from below by the restoring force (pressing force) of the contact members 15.

The calendar disk 3 (first calendar disk 31), the calendar disk holder 4, and the solar panel 5 (substantially circular solar panel 51) are assembled to the base 2 as illustrated in FIG. 10. The dial 7 (first dial 71) is placed thereon to be overlaid on the upward side (front surface side) in the axial direction L. The first dial 71 is formed of a light-transmissive material that transmits sunlight, such as a transparent resin. This enables the solar panel 5 (substantially circular solar panel 51) disposed at a lower level than the first dial 71 to receive sunlight, giving rise to enough light necessary for power generation.

A shaft hole 711 is provided approximately at the center of the dial 7 (first dial 71) corresponding to the position where the hand shaft 25 is inserted. The hand shaft 25 passes through the shaft hole 711 from below to above in the axial direction L and is exposed above the dial 7 (first dial 71). An unillustrated hand such as an hour hand, a minute hand, a second hand, or the like is attached to the portion of the hand shaft 25 exposed above the dial to appropriately display time, and the like.

A date display window 712 (see FIG. 1) is provided in the dial 7 (first dial 71) at a position corresponding to the small window 512 in the solar panel 5 (substantially circular solar panel 51). From the date display window 712, the letter part 312 (see FIG. 9) corresponding to the date display of the calendar disk 3 (first calendar disk 31) can be seen exposed through the small window 512.

Next, the "second model" timepiece 200 (the internal configuration or module of the timepiece 200) is described with reference to FIG. 4 to FIG. 6 and the like. In FIG. 6, the dial 7 is not shown. Components and parts similar to those of the above-described "first model" are denoted by the same reference numerals, and their description is omitted as appropriate.

As illustrated in FIG. 4, the "second model" timepiece 200 (the internal configuration or module of the timepiece 200) includes a circuit board 1, base 2, solar panel 5 (substantially annular solar panel 52), outer peripheral frame 6, dial 7, and the like, in order from the back surface side (downward side) to the front surface side (upward side) of the timepiece 200 along the axial direction L.

In the timepiece 200, the configurations of the circuit board 1, the base 2, and the outer peripheral frame 6 are the same as those of the "first model" timepiece 100 (the internal configuration or module of the timepiece 100) illustrated in FIG. 1 to FIG. 3 and the like. Thus, their description thereof is omitted.

The calendar disk 3 (second calendar disk 32 in FIG. 4 and the like), the calendar disk holder 4, and the like are disposed on top (front side) of the base 2.

As illustrated in FIG. 4 and the like, the second calendar disk 32 is in a substantially annular shape similarly to the first calendar disk 31 and disposed at a lower level than the outer peripheral frame 6.

The calendar disk 3 (second calendar disk 32) includes an outer periphery 321 being an outer peripheral side portion, an inner periphery 322 being an inner peripheral side portion, and a letter part 323 provided between the outer periphery 321 and the inner periphery 322. Between the outer periphery 321 and the inner periphery 322 is a penetrating part 324 that penetrates the front and back of the calendar disk 3, while leaving a minimum portion for the letter part 323 and for connecting the letter part 323 to the outer periphery 321 or the inner periphery 322.

At least a portion of the inner periphery 322 of the calendar disk 3 (second calendar disk 32) is disposed on a second mounting part 22, i.e., raised parts 221 of the second mounting part 22 in the illustrated configuration.

On the inner peripheral side of the inner periphery 322, similarly to the first calendar disk 31, teeth (gear part) 35 that meshes with a gear 27 constituting a train wheel mechanism are provided along the peripheral direction (see FIG. 6).

The material of the calendar disk 3 (second calendar disk 32) is not particularly limited. The calendar disk is formed of, for example, a metal such as stainless steel (SUS) or titanium. The method of forming the letter part 323 or the like is not particularly limited. Various methods such as laser processing, punching processing of punching a metal plate, and/or casting can be used.

The calendar disk holder 4 is similar to that of the "first model" timepiece 100. Thus, its description is omitted.

In the "second model" timepiece 200, the solar panel 5 is the substantially annular solar panel 52 as illustrated in FIG. 4. The solar panel 5 (substantially annular solar panel 52) is disposed on a first mounting part 21 of the base 2. The first mounting part 21 is provided at a position lower than the calendar disk 3 (second calendar disk 32), i.e., the position corresponding to the calendar disk 3 (second calendar disk 32).

Thus, the substantially annular solar panel 52 is provided at a position lower than the calendar disk 3 (second calendar disk 32). As described above, however, the second calendar disk 32 is provided with the penetrating part 324. This allows sunlight to pass through the penetrating part 324 to be irradiated on the solar panel 5 (substantially annular solar panel 52), giving rise to enough light necessary for power generation.

The first mounting part 21 of the base 2 is provided such that a main surface 21a is at a height lower than the calendar disk 3 (second calendar disk 32). This allows the substantially annular solar panel 52 to be disposed on the first mounting part 21 of the base 2. The distance from the main surface 21a of the first mounting part 21 of the base 2 to the lower surface of the calendar disk 3 (second calendar disk 32) in the thickness direction of the base is greater than the thickness of the substantially annular solar panel 52.

This prevents the substantially annular solar panel 52 from interfering with the lower surface of the second calendar disk 32 and allows the calendar disk 3 (second calendar disk 32) to rotate without inhibition even when the solar panel 5 (substantially annular solar panel 52) is disposed on the first mounting part 21.

The solar panel 5 (substantially annular solar panel 52) includes the outer periphery 523 that is located in the outer periphery and does not contribute to power generation. The outer periphery 523 is provided with extensions 522 extending to the outer peripheral side. Similarly to the substantially circular solar panel 51 in the "first model", terminals 55 are provided in a portion of the back surface side of the extensions 522. Contact members 15 are connected from below to a position corresponding to the terminals 55. Each of the contact members 15 functions as a pressing member that exerts a restoring force upward from the circuit board 1 disposed under the base 2.

As illustrated in FIG. 5 and FIG. 6, there is a distance between a second lower surface 62 of the outer peripheral frame 6 and the upper surface of the solar panel 5 (substantially annular solar panel 52) when the solar panel 5 (substantially annular solar panel 52) is disposed on the first mounting part 21 (main surface 21a of the first mounting part 21) of the base 2 in a space lower than the calendar disk 3 (second calendar disk 32). This means that, when the solar panel 5 is pushed up by the contact members 15, the second lower surfaces 62 of the outer peripheral frame 6 cannot directly press the outer periphery 523 of the solar panel.

Therefore, when the solar panel 5 (substantially annular solar panel 52) is disposed on the first mounting part 21 (main surface 21a of the first mounting part 21), the spacers 8 are attached to the holes 63 provided in the second lower surfaces 62 of the outer peripheral frame 6.

FIG. 6 is a cross-sectional perspective view of a major portion of the timepiece in which one of the spacers 8 is attached to one of the holes 63. FIG. 14 is a side cross-sectional view of the major portion of the timepiece 200 illustrated in FIG. 6.

As illustrated in FIG. 6 and FIG. 14, the spacer 8 is attached to a position approximately opposite to one of the contact members 15, which are pressing members. The outer peripheral frame 6 indirectly presses via the spacer 8 at least a portion (for example, the extensions 522 and/or the outer periphery 523) of the solar panel 5 (substantially annular solar panel 52) from above. Here, the spacer 8 is attached to one of the second lower surfaces 62 of the outer peripheral frame 6. This allows the solar panel 5 (substantially annular solar panel 52) to be pressed against a pressing force from below exerted by the contact member 15 serving as a pressing member, enabling the solar panel 5 (substantially annular solar panel 52) to be reliably connected to terminals 13 on the circuit board 1 while preventing the solar panel 5 (substantially annular solar panel 52) from floating up. This also prevents the solar panel 5 (substantially annular solar panel 52) disposed at a lower level than the calendar disk 3 (second calendar disk 32) from interfering with the rotation of the calendar disk 3 due to, for example, contact with the lower surface of the calendar disk 3 (second calendar disk 32).

The calendar disk 3 (second calendar disk 32), the calendar disk holder 4, and the solar panel 5 (substantially annular solar panel 52) are assembled to the base 2. The dial 7 (second dial 72) is placed thereon to be overlaid on the upward side (front surface side) in the axial direction L.

The dial 7 (second dial 72) is formed of, for example, a metal material such as titanium or stainless steel (SUS), various resins, or the like. The second dial 72 is a non-transparent member that does not allow light to pass through.

As illustrated in FIG. 4, the dial 7 (second dial 72) is in substantially disk-shaped and includes a main body 722 and an outer periphery 724. A shaft hole 721 through which a hand shaft 25 is inserted is provided approximately at the center of the main body 722. The outer periphery 724 is provided on the outer periphery of the main body 722 and provided with a plurality of openings 723 arranged in the peripheral direction. In the second dial 72, at least a portion corresponding to the calendar disk 3 (second calendar disk 32) is the outer periphery 724, and the letter part 323 of the calendar disk 3 (second calendar disk 32) is exposed visually through the opening 723. The second dial 72 transmits sunlight through the opening 723 to the solar panel 5 (substantially annular solar panel 52) disposed at a lower level than the calendar disk 3 (second calendar disk 32).

The second dial 72 (at least the outer periphery 722) may be formed of, for example, a light-transmissive material that transmits sunlight, such as a transparent resin. In this case, the outer periphery 722 need not be provided with the opening 723.

### [Functions]

Next, functions of the present embodiment are described.

In the illustrated configuration, the base 2 is disposed on the circuit board 1, the inner periphery 313 or 322 of the calendar disk 3 (the first calendar disk 31 or the second calendar disk 32, respectively) is disposed on the raised parts 221 of the second mounting part 22 of the base 2, and the calendar disk holder 4 is disposed inside the calendar disk 3 (the first calendar disk 31 or the second calendar disk 32).

When the timepiece is the "first model" timepiece 100, the substantially circular solar panel 51 is disposed in a space higher than the calendar disk 3 (first calendar disk 31).

That is, at least a portion of the outer periphery 513 of the substantially circular solar panel 51 is disposed on the main surface 23a of the outer peripheral side mounting part 23 of the base 2, and the outer peripheral frame 6 and the dial 7 (first dial 71) are disposed thereon.

At least a portion of the first lower surfaces 61 of the outer peripheral frame 6 contacts the main surface 23a of the outer peripheral side mounting part 23. At least a portion of the second lower surfaces 62 of the outer peripheral frame 6 contacts at least a portion of the upper surface of the outer periphery 513 of the substantially circular solar panel 51.

This allows at least a portion of the outer periphery 513 of the substantially circular solar panel 51 to be sandwiched between the main surface 23a of the outer peripheral side mounting part 23 of the base 2 and the second lower surfaces 62 of the outer peripheral frame 6. This further allows the substantially circular solar panel 51 to be directly pressed by the second lower surfaces 62 of the outer peripheral frame 6 so as not to float up even when the substantially circular solar panel 51 is pressed from below by the contact members 15.

When the timepiece is the "second model" timepiece 200, the substantially annular solar panel 52 is disposed on the main surface 21a of the first mounting part 21 of the base 2 in a space lower than the calendar disk 3 (second calendar disk 32).

In this case, the calendar disk 3 (second calendar disk 32), the outer peripheral frame 6, and the dial 7 (second dial 72) are disposed on the substantially annular solar panel 52.

Here, the outer peripheral frame 6 is attached to the base 2 with the spacers 8 being attached to the holes 63 provided in the second lower surface of the outer peripheral frame 6. In this case, also, at least a portion of the first lower surfaces 61 of the outer peripheral frame 6 contacts the main surface 23a of the outer peripheral side mounting part 23. At least a portion of the outer periphery 523 of the substantially annular solar panel 52 contacts the spacers 8 provided on the second lower surfaces 62 of the outer peripheral frame 6. The outer peripheral frame 6 presses the substantially annular solar panel 52 against the main surface 21a of the first mounting part 21 of the base 2.

This allows the substantially annular solar panel 52 to be indirectly pressed by the outer peripheral frame 6 via the spacers 8 provided on the second lower surfaces 62 so as not to float up even when pressed from below by the contact members 15.

Electronic timepieces generally use a substantially circular solar panel that has a large light-receiving area and is relatively inexpensive. Some models use a substantially annular solar panel that is relatively expensive but has high power generation efficiency relative to the light-receiving area.

However, the base, the outer peripheral frame, and the like correspond to the arrangement and shape of just one type of solar panel. Therefore, it has been necessary to design and manufacture a new base and/or a new outer peripheral frame when a solar panel with a different arrangement and shape is to be used.

In addition, devices such as a timepiece in particular need to be made smaller and thinner to be worn on the user's wrist. This amounts to a problem that the degree of freedom is low in the arrangement of a large component such as a solar panel and a calendar disk.

For example, when a substantially annular calendar disk and a substantially circular solar panel are mounted on an electronic timepiece, the substantially circular solar panel is generally disposed at a higher level than the substantially annular calendar disk. Conversely, if the substantially circular solar panel is disposed at a lower level than the substantially annular calendar disk, not only light to the solar panel is shielded by the calendar disk, thereby reducing power generation efficiency, but also the substantially circular solar panel having a relatively large area (volume) is disposed further inside the device, thereby reducing the degree of freedom in the arrangement of other components.

When a substantially annular calendar disk and a substantially annular solar panel are mounted on an electronic timepiece, the substantially annular solar panel may be disposed either at a higher or lower level than the substantially annular calendar disk. However, if the substantially annular solar panel is disposed on the substantially annular calendar disk, a boundary is created between the substantially annular solar panel and the region inside the solar panel. This may lead to deteriorated design. For example, the user can easily recognize that the substantially annular solar panel is disposed. Therefore, it is preferable to dispose the substantially annular solar panel at a level lower than the substantially annular calendar disk, for the reasons of improving the design by purposely showing the substantially annular calendar disk, making the boundary between the substantially annular solar panel and the region inside the solar panel inconspicuous with the calendar disk, and the like.

Thus, it has been necessary to design and manufacture a new base and/or a new outer peripheral frame depending on the shape of the solar panel due to the need for a smaller and thinner device, the positional relationship with a relatively large component such as a calendar disk, and the like.

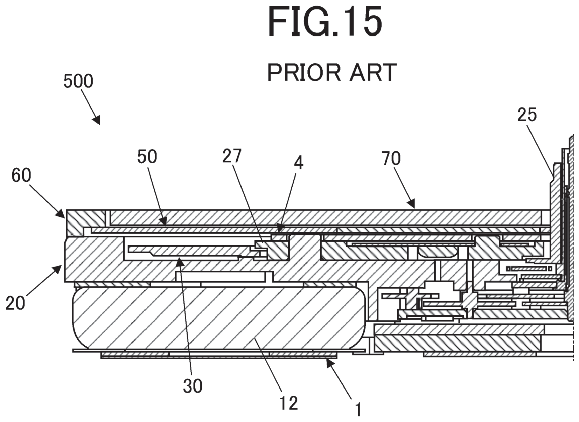

For example, FIG. 15 is a side cross-sectional view of a major portion of a conventional timepiece (timepiece module) . In the example illustrated in FIG. 15, there is no space for a solar panel 50 to be disposed at a lower level than a calendar disk 30. In this case, a base 20 and an outer peripheral frame 60 are only compatible with the case where a timepiece 500 (module of the timepiece 500) disposes the solar panel 50 in a space higher than the calendar disk 30 (the "first model" in the present embodiment), and incompatible with the case where the solar panel 50 is disposed in a space lower than the calendar disk 30 (the "second model" in the present embodiment) .

In the configuration illustrated in FIG. 15, the solar panel 50 is disposed almost entirely below a dial 70. This requires the dial 70 to be light-transmissive. Disposing the solar panel 50 at a higher level than the calendar disk 30 also creates design constraints such as difficulty in making the calendar disk 30 visible as an exterior design.

In this regard, by adopting the configuration of the present embodiment, it is possible to selectively dispose the solar panel 5 (substantially circular solar panel 51 or substantially annular solar panel 52) either at a higher or lower level than the calendar disk 3 (first calendar disk 31 or second calendar disk 32) depending on the design or the like, while using at least the common base 2 and the common outer peripheral frame 6.

### [Advantageous Effects]

As described above, according to the present embodiment, the timepieces 100 and 200, which are the electronic devices, include: the base 2 including: the first mounting part 21 that includes the main surface 21a provided in a substantially annular shape; the second mounting part 22 that is provided at an inner side of the first mounting part 21 and includes the main surface 22a; and the outer peripheral side mounting part 23, i.e., the third mounting part, that is provided around the first mounting part 21; at least one raised part 221 that is provided on the first mounting part 21 at a position corresponding to an outer periphery of the second mounting part 22 and is raised upward in the thickness direction of the base; and the substantially annular calendar disk 3 that has a thickness smaller than a difference between the height of the at least one raised part 221 and the height of the main surface 23a of the outer peripheral side mounting part 23, i.e., the third mounting part, and includes the inner peripheral side partly disposed on the at least one raised part 221. The main surface 22a of the second mounting part 22 and the at least one raised part 221 are both lower than the main surface 23a of the outer peripheral side mounting part 23, i.e., the third mounting part, and higher than the main surface 21a of the first mounting part 21.

This secures a space for the solar panel 5 (substantially circular solar panel 51 or substantially annular solar panel 52) to be disposed at a higher or lower level than the calendar disk 3 (first calendar disk 31 or second calendar disk 32), allowing for use of the common base 2 or the like for timepieces of a plurality of designs having different arrangement positions, shapes, and the like for the solar panel 5.

This makes it possible to save labor and cost for designing and manufacturing a new base 2 and/or the like for each design and/or the like, allowing for easy production of a timepiece having various exterior designs and/or the like without being bound by constraints such as design.

In the present embodiment, the main surface 23a of the outer peripheral side mounting part 23, i.e., the third mounting part, includes substantially arc-shaped surfaces, and the outer peripheral frame 6 is disposed along at least a portion of the outer peripheral side mounting part 23.

The outer peripheral frame 6 includes: the first lower surfaces 61 that are provided in a lower portion on the outer peripheral side in the thickness direction of the base and are in contact with the main surface 23a of the outer peripheral side mounting part 23, i.e., the third mounting part; and the second lower surfaces 62 that are provided on the inner peripheral side of the first lower surfaces 61 and at a higher level than at least a portion of the first lower surfaces 61.

The solar panel 5 (substantially circular solar panel 51) is disposed between the outer peripheral side mounting part 23, i.e., the third mounting part, and the second lower surface 62 of the outer peripheral frame 6.

This enables the substantially circular solar panel 51 to be held at a predetermined position when the substantially circular solar panel 51 is disposed on the base 2.

The outer peripheral frame 6 of the present embodiment includes the hooks 65 that extend downward in the thickness direction of the base and are locked to the outer peripheral portion of the base 2.

By hooking the hooks 65 (the locking claws 651 of the hooks 65) onto the outer peripheral portion of the base 2, the outer peripheral frame 6 is locked to the base 2 and mounted so as not to float up from the base 2. This suppresses floating up of a component (for example, the substantially circular solar panel 51) disposed between the base 2 and the outer peripheral frame 6.

The outer peripheral frame 6 is locked to the base 2 and is capable of directly or indirectly pressing the outer peripheral portion of the solar panel 5 (substantially circular solar panel 51 or substantially annular solar panel 52) by at least the second lower surface 62.

The solar panel 5 needs to be connected to the circuit board 1 by the contact members 15, and each of the contact members 15 may be a pressing member such as a coil spring. Even when the contact member 15 is a pressing member, the solar panel 5 can be pressed directly or indirectly by the outer peripheral frame 6. This prevents the solar panel from tilting or interfering with a component (for example, the second calendar disk 32) disposed on the solar panel 5 even when the solar panel is pressed upward.

When the substantially circular solar panel 51 is disposed in a space higher than the calendar disk 3 (first calendar disk 31), at least a portion of the outer periphery 513 of the substantially circular solar panel 51 can be sandwiched between the second lower surfaces 62 of the outer peripheral frame 6 and the main surface 23a of the outer peripheral side mounting part 23 of the base 2.

This allows the substantially circular solar panel 51, a component, to be stably held against a pressing force even when the substantially circular solar panel 51 is pressed from below by the contact member 15 or the like.

In addition, in the present embodiment, the upper surface of the raised parts 221 of the second mounting part 22 includes substantially arc-shaped surfaces, and the calendar disk holder 4 having the roof 41 that extends above at least a portion of the inner peripheral side of the calendar disk 3 is provided inside the raised parts 221.

This allows at least the inner peripheral side of the calendar disk 3 to be pressed, preventing the calendar disk 3 from floating up.

The first mounting part 21 of the base 2 is provided at a position lower than the calendar disk 3 (second calendar disk 32), and the substantially annular solar panel 52 can be disposed on the first mounting part 21. This secures a space for the solar panel 5 to be disposed at a lower level than the calendar disk 3 (second calendar disk 32), allowing the solar panel 5 (substantially circular solar panel 51 or substantially annular solar panel 52) to be disposed either at a higher or lower level than the calendar disk 3 (first calendar disk 31 or second calendar disk 32) without changing the shape and configuration of the base 2 and the like.

The distance from the main surface 21a of the first mounting part 21 of the base 2 to the lower surface of the calendar disk 3 (second calendar disk 32) in the thickness direction of the base is greater than the thickness of the substantially annular solar panel 52.

This prevents the solar panel 5 from coming into contact with the calendar disk 3 (second calendar disk 32) and inhibiting the rotation thereof when the solar panel 5 is disposed at a lower level than the calendar disk 3 (second calendar disk 32).

### [Variation]

Although an embodiment of the present disclosure is described above, it is needless to say that the present disclosure is not limited to the embodiment and various changes can be made without departing from the scope of the present disclosure.

For example, in the embodiment, when the solar panel 5 is provided at a lower level than the calendar disk 3 (second calendar disk 32), the penetrating part 324 through which sun light passes is provided in the calendar disk 3 (second calendar disk 32). However, for example, when the entire calendar disk 3 is formed of a light-transmissive material, the calendar disk 3 without the penetrating part 324 may be disposed on the solar panel 5 (substantially annular solar panel 52).

Also, the outer peripheral frame 6 is not limited to the shape (substantially annular shape) described in the embodiment.

The outer peripheral frame 6 may be disposed at least at a position opposite to the contact members 15 functioning as pressing members. The outer peripheral frame 6 may also be in an arc shape along the outer periphery of the base 2. In this case, for example, arc-shaped outer peripheral frames are disposed at three or four positions including a position opposite to the contact members 15 at as equal intervals as possible. This allows the solar panel 5 to be stably held without tilting.

In addition, in the embodiment, the solar panel 5 provided at a lower level than the calendar disk 3 (second calendar disk 32) has a substantially annular shape. However, the shape of the solar panel 5 provided at a lower level than the calendar disk 3 (second calendar disk 32) is not limited to the substantially annular shape.

For example, the solar panel 5 may be C-shaped or the like.

It is preferable that the first mounting part 21, which is a place for disposing the solar panel 5 at a lower level than the calendar disk 3 (second calendar disk 32), is provided in a substantially annular shape because this makes it possible to cope with either a case where the solar panel 5 disposed on the first mounting part 21 is substantially annular or a case where the solar panel 5 is C-shaped or the like without any design change.

Further, in the embodiment, the holes 63 are provided in the outer peripheral frame 6, and the spacers 8 are attached to the holes 63. However, the portion to which the spacers 8 are attached is not limited to the holes 63 and may be recesses or the like that do not vertically penetrate the outer peripheral frame 6.

In the present embodiment, the electronic device is the timepiece 100 or 200. However, the electronic device is not limited to a timepiece.

The electronic device may be any device as long as the device includes the calendar disk 3 and can secure a space for the solar panel 5 to be disposed at a higher or lower level than the calendar disk 3. The electronic device is not limited to a device that displays time by hands.

For example, a calendar device that does not display time but displays a date, a day of the week, or the like may be used.

Even when the electronic device is a timepiece, the electronic device is not limited to a timepiece that displays time by hands as described in the embodiment. For example, time may be displayed on a digital display such as a liquid crystal display.

Further numbered aspects of the present disclosure are set out below. These aspects form part of the description.
Aspect 1. An electronic device, comprising:
   a base 2 including:
      a first mounting part 21 that includes a main surface 21a provided in an annular shape;
      a second mounting part 22 that is provided at an inner side of the first mounting part 21 and includes a main surface 22a and a raised part 221 raised upward in a thickness direction of the base 2; and
      a third mounting part 23 that is provided around the first mounting part 21, wherein
      the main surface 22a of the second mounting part 22 and the raised part 221 are both lower than a main surface 23a of the third mounting part 23 and higher than the main surface 21a of the first mounting part 2); and
   an annular calendar disk 32 that has a thickness smaller than a difference between a height of the raised part 221 of the second mounting part 22 and a height of the main surface 23a of the third mounting part 23 and includes an inner peripheral side partly disposed on the second mounting part 22.
Aspect 2. The electronic device according to aspect 1, wherein
   the main surface 23a of the third mounting part 23 includes an arc-shaped surface or an annular-shaped surface, and
   the electronic device further comprises an outer peripheral frame 6 that is disposed along at least a portion of the third mounting part 23 of the base 2.
Aspect 3. The electronic device according to aspect 2, wherein the outer peripheral frame 6 includes a first lower surface 61 that is provided in a lower portion on an outer peripheral side in the thickness direction and is in contact with the main surface 23a of the third mounting part 23, and a second lower surface 62 that is provided on an inner peripheral side of the first lower surface 61 and is at a higher level than at least a portion of the first lower surface 61.
Aspect 4. The electronic device according to aspect 3, further comprising a circular solar panel 51 that is disposed between the third mounting part 23 and the second lower surface 62.
Aspect 5. The electronic device according to aspect 4, wherein the outer peripheral frame 6 is locked to the base 2 and presses at least a portion of an outer peripheral portion of the circular solar panel 51 by at least the second lower surface 62.
Aspect 6. The electronic device according to aspect 5, wherein at least a portion of the outer peripheral frame 6 includes a hook 65 that extends downward in the thickness direction and is locked to an outer peripheral portion of the base 2.
Aspect 7. The electronic device according to any one of aspects 1 to 3, wherein
   the first mounting part 21 is provided at a lower level than the calendar disk 3, and
   the electronic device further comprises an annular solar panel 52 that is disposed on the first mounting part 21. Aspect 8. The electronic device according to aspect 7, wherein a distance from the main surface 21a of the first mounting part 21 to an upper surface of the raised part 221 in the thickness direction is greater than a thickness of the annular solar panel 52.
Aspect 9. The electronic device according to any one of aspects 1 to 8, wherein
   an upper surface of the raised part 221 includes an arc-shaped surface, and
   the electronic device further comprises a calendar disk holder 4 that is provided at an inner side of the raised part 221 and includes a roof 41 extending above at least a portion of an inner peripheral side of the calendar disk 3.
Aspect 10. An electronic timepiece, comprising:
   a base 2 including:
      a first mounting part 21 that includes a main surface 21a provided in an annular shape;
      a second mounting part 22 that is provided at an inner side of the first mounting part 21 and includes a main surface 22a and a raised part 221 raised upward in a thickness direction of the base 2; and
      a third mounting part 23 that is provided around the first mounting part 21, wherein
      the main surface 22a of the second mounting part 22 and the raised part 221 are both lower than a main surface 23a of the third mounting part 23 and higher than the main surface 21a of the first mounting part 21; and
   an annular calendar disk 32 that has a thickness smaller than a difference between a height of the raised part 221 of the second mounting part 22 and a height of the main surface 23a of the third mounting part 23 and includes an inner peripheral side partly disposed on the second mounting part 22.

Although embodiments and aspects of the present disclosure have been described and illustrated in detail, the disclosed embodiments and aspects are made for purposes of illustration and example only and not limitation. The scope of the present disclosure should be interpreted by the terms of the appended claims and their legal equivalents.

## Claims

1. An electronic device, comprising:
a base (2) including:
a first mounting part (21) that includes a main surface (21a) provided in an annular shape;
a second mounting part (22) that is provided at an inner side of the first mounting part (21) and includes a main surface (22a); and
a third mounting part (23) that is provided around the first mounting part (21), wherein
at least one raised part (221) is provided on the first mounting part (21) at a position corresponding to an outer periphery of the second mounting part (22) and is raised upward in a thickness direction of the base (2), and
the main surface (22a) of the second mounting part (22) and the at least one raised part (221) are both lower than a main surface (23a) of the third mounting part (23) and higher than the main surface (21a) of the first mounting part (21); and
an annular calendar disk (3) that has a thickness smaller than a difference between a height of the at least one raised part (221) and a height of the main surface (23a) of the third mounting part (23) and includes an inner peripheral side partly disposed on the at least one raised part (221).

2. The electronic device according to claim 1, wherein
the main surface (23a) of the third mounting part (23) includes an arc-shaped surface or an annular-shaped surface, and
the electronic device further comprises an outer peripheral frame (6) that is disposed along at least a portion of the third mounting part (23) of the base (2).

3. The electronic device according to claim 2, wherein the outer peripheral frame (6) includes a first lower surface (61) that is provided in a lower portion on an outer peripheral side in the thickness direction and is in contact with the main surface (23a) of the third mounting part (23), and a second lower surface (62) that is provided on an inner peripheral side of the first lower surface (61) and is at a higher level than at least a portion of the first lower surface (61).

4. The electronic device according to claim 3, further comprising a circular solar panel (51) that is disposed between the third mounting part (23) and the second lower surface (62).

5. The electronic device according to claim 4, wherein the outer peripheral frame (6) is locked to the base (2) and presses at least a portion of an outer peripheral portion of the circular solar panel (51) by at least the second lower surface (62).

6. The electronic device according to claim 5, wherein at least a portion of the outer peripheral frame (6) includes a hook (65) that extends downward in the thickness direction and is locked to an outer peripheral portion of the base (2).

7. The electronic device according to any one of claims 1 to 3, wherein
the first mounting part (21) is provided at a lower level than the calendar disk (3), and
the electronic device further comprises an annular solar panel (52) that is disposed on the first mounting part (21).

8. The electronic device according to claim 7, wherein a distance from the main surface (21a) of the first mounting part (21) to an upper surface of the at least one raised part (221) in the thickness direction is greater than a thickness of the annular solar panel (52).

9. The electronic device according to any one of claims 1 to 8, wherein
an upper surface of the at least one raised part (221) includes an arc-shaped surface, and
the electronic device further comprises a calendar disk holder (4) that is provided at an inner side of the at least one raised part (221) and includes a roof (41) extending above at least a portion of an inner peripheral side of the calendar disk (3).

10. The electronic device according to claim 9, wherein a plurality of further raised parts (221) are provided on the second mounting part (22) at the boundary with the first mounting part (21) and are raised upward in the thickness direction of the base (2), and
wherein upper surfaces of the plurality of further raised parts (221) include arc-shaped surfaces, and the plurality of further raised parts (221) are disposed in an arc shape with partial breaks to support the inner peripheral side of the calendar disk (3).

11. The electronic device according to claim 1, wherein the electronic device is an electronic timepiece (100, 200).
